# FASCICULE DE BREVET EUROPEEN

(11) **EP 0 956 990 B1**
(45) Date de publication et mention de la délivrance du brevet: **27.11.2002**
(21) Numéro de dépôt: 99401027.0
(22) Date de dépôt: 27.04.1999
(51) Int. Cl.: B60J 7/14, B60J 7/20

(54) **Toit repliable en trois éléments pour véhicule découvrable**
Faltdach in drei Teilen für Cabriofahrzeug
Foldable roof in three elements for convertible vehicle

(30) Priorité: 12.05.1998 FR 9805971
(43) Date de publication de la demande: 17.11.1999
(73) Titulaire: Société Européenne de Brevets Automobiles, 75011 Paris (FR)
(72) Inventeur: Guillez, Jean-Marc, 79140 Cerizay (FR); Queveau, Paul, 79140 Cerizay (FR); Queveau, Gérard, 79140 Cerizay (FR)
(74) Mandataire: Keib, Gérard

(56) Documents cités:
- EP-A- 0 678 411
- DE-A- 3 903 358
- DE-C- 4 435 222

## Description

La présente invention concerne un toit repliable dans le coffre arrière d'un véhicule découvrable permettant d'optimiser d'une part le volume disponible du coffre arrière quand le toit est replié et d'autre part de reculer au maximum la cloison des sièges arrière autorisant un espace disponible plus important pour les places arrière.

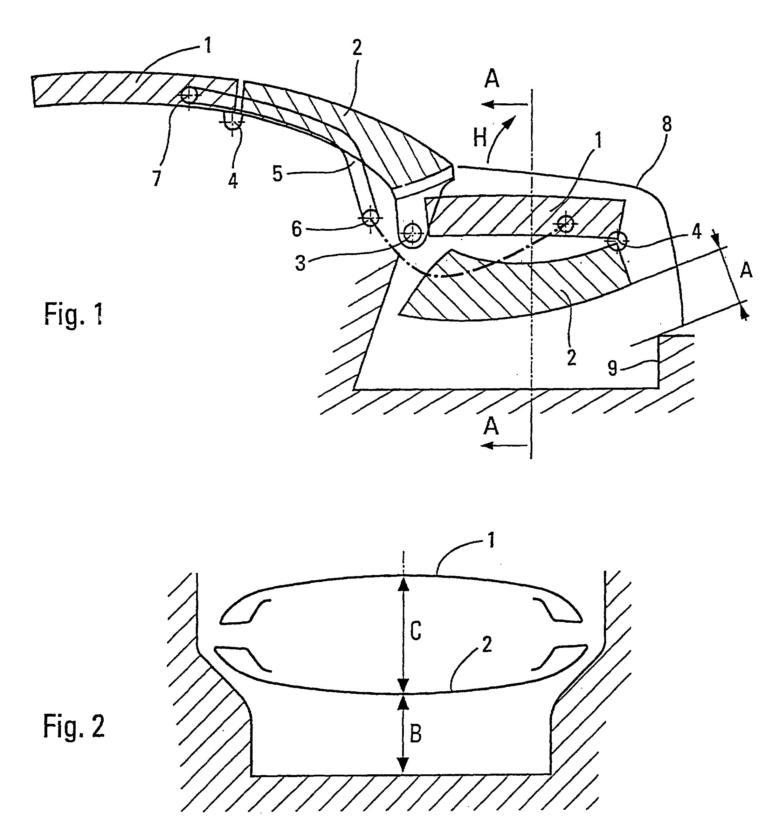

Dans un schéma traditionnel d'ouverture de toit, illustré par les figures 1 et 2, les éléments de toit 1 et 2 se replient vers l'arrière par un système à parallélogramme composé d'une articulation 3 solidaire du châssis et d'une articulation 4 solidaire de deux éléments de toit ainsi que d'un tirant 5 articulé sur le châssis en 6 et sur l'élément de toit avant en 7.

Lorsque les deux éléments de toit 1, 2 sont repliés dans le coffre arrière après ouverture de la malle arrière 8 dans le sens de la flèche H, la contradiction des galbes des deux éléments de toit implique un cote C très importante, diminuant d'autant la hauteur B de coffre ainsi que l'entrée de coffre A par rapport à la traverse arrière 9.

Un autre inconvénient réside dans le fait que pour optimiser la cote B l'élément de toit 2 doit être le plus horizontal possible impliquant de ce fait une cloison de siège arrière très avancée limitant ainsi l'espace pour les places arrière.

Le but de la présente invention est de remédier aux inconvénients ci-dessus.

L'invention vise ainsi, un toit repliable pour véhicule découvrable, comprenant un élément avant articulé à un élément arrière dont l'extrémité arrière est articulée par rapport au véhicule, ces deux éléments pouvant être rangés dans le coffre du véhicule, de façon
que l'élément avant soit replié sur l'élément arrière relié à son articulation par rapport au véhicule.

L'élément arrière comporte un élément central qui s'étend jusqu'à l'articulation entre les éléments avant et arrière, cet élément central étant articulé par rapport à l'élément arrière et coopérant avec des moyens qui, en position de rangement dans le coffre, maintiennent l'élément central à une certaine distance au-dessus de l'élément arrière.

Un tel toit repliable est connu d'après le EP-A-0 917 975 qui est un document antérieur appartenant à l'état de la technique visé à l'article 54(3) de la Convention sur le Brevet Européen et n'ayant pas été pris en compte pour l'appréciation de l'activité inventive.

Suivant ce document antérieur, l'élément central est relié à une extrémité d'un tirant par l'intermédiaire d'un bras émanant de cet élement central, le bras étant agencé pour faire pivoter l'élément central suivant son articulation sur l'élément arrière en sens inverse du pivotement de l'élément arrière autour de l'articulation, l'autre extrémité du tirant étant articulée sur le bras de pivotement avant de l'élément de toit avant.

Suivant la présente invention, l'autre extrémité du tirant est articulée sur le châssis du véhicule.

Ce type de mécanisme permet de faire pivoter l'élément central en sens inverse du pivotement de l'élément arrière et de maîtriser la position exacte souhaitée lorsque cet élément est replié dans le coffre par un positionnement spécifique des articulations.

En outre, la position de l'élément central au-dessus de l'élément arrière libère dans la partie centrale de cet élément arrière, une ouverture qui augmente la hauteur disponible dans le coffre.

Selon une version avantageuse de l'invention, l'élément avant est fixé de façon articulée à l'extrémité d'un tirant dont l'autre extrémité est fixée de façon articulée au véhicule, ce tirant étant adapté pour maintenir ledit élément avant dans une position sensiblement horizontale lors du pivotement de l'élément arrière vers le coffre autour de son articulation.

Selon une version préférée de l'invention, chaque bras comporte une extrémité fixée de façon articulée à une extrémité du tirant et une extrémité solidaire du bord de l'élément central, et est articulé sur l'élément arrière.

L'élément central ci-dessus peut être constitué par la lunette arrière du toit.

D'autres particularités et avantages de l'invention apparaîtront encore dans la description ci-après.

Aux dessins annexés donnés à titre d'exemple non limitatifs :
- la figure 1 est une vue schématique en coupe longitudinale partielle d'un véhicule équipé d'un toit repliable selon l'art antérieur ;
- la figure 2 est une vue en coupe selon le plan A-A de la figure 1 ;
- la figure 3 est une vue analogue à la figure 1 montrant un toit repliable conforme à l'invention ;
- la figure 4 est une vue en coupe suivant le plan IV-IV de la figure 3 ;
- la figure 5 est une vue schématique en coupe longitudinale partielle d'un véhicule équipé d'un toit repliable, illustrant un autre avantage de l'invention ;
- la figure 6 est une vue en perspective de 3/4 arrière d'un toit repliable selon l'invention en position fermée et en position partiellement ouverte ;
- la figure 7 est un schéma illustrant l'équilibrage du toit repliable ;
- la figure 8 est une vue en perspective partielle des joints d'étanchéité de l'articulation entre les deux éléments de toit arrière ;
- la figure 9 est une vue en coupe selon le plan IX-IX de la figure 8 ;
- la figure 10 est une vue en coupe selon le plan X-X de la figure 8.

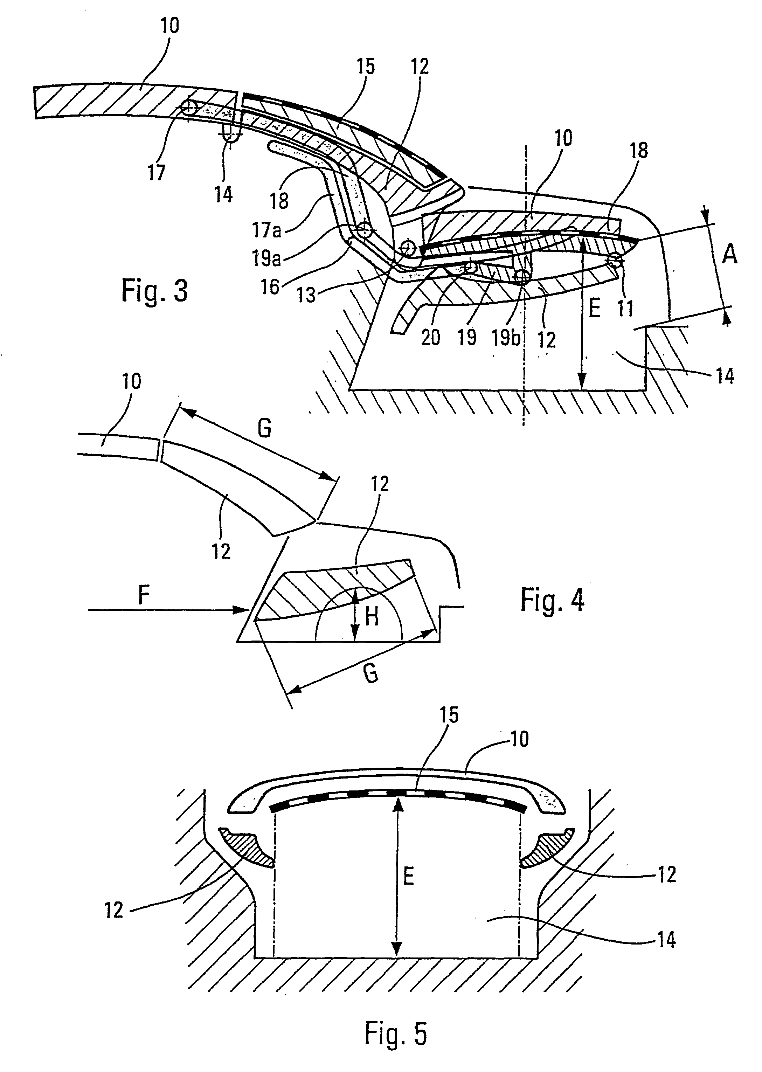

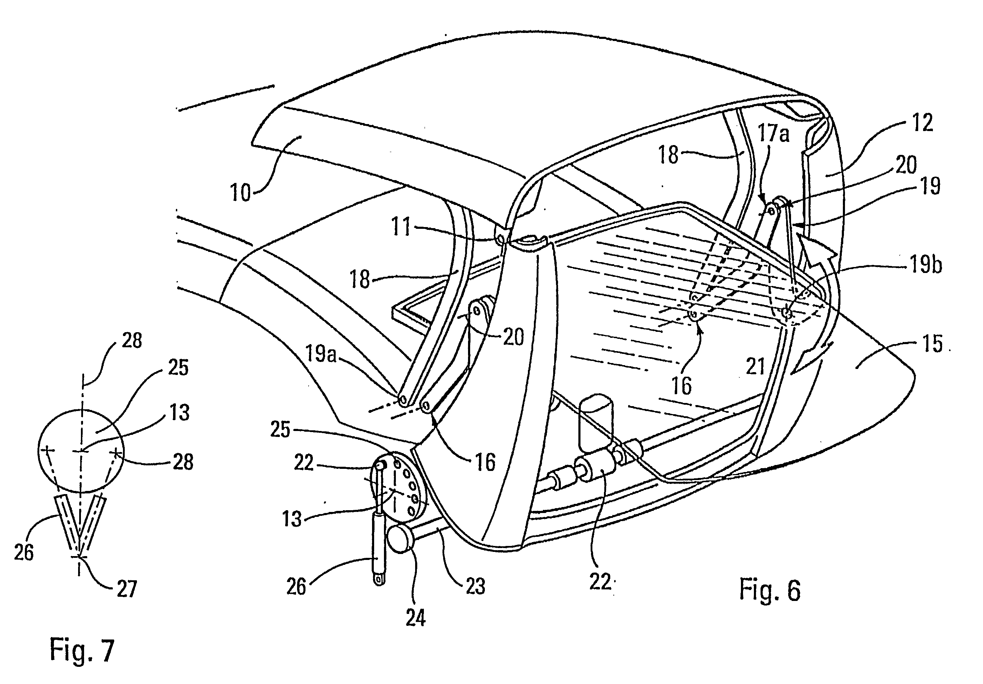

En référence aux figures 3 et 6, le toit repliable pour véhicule découvrable, comprend un élément avant 10 articulé en 11 à un élément arrière 12 dont l'extrémité arrière 12a est articulée en 13 par rapport au véhicule. Ces deux éléments 10, 12 peuvent être rangés dans le coffre 14 du véhicule, de façon que l'élément avant 10 soit replié sur l'élément arrière 12 relié à son articulation 13 par rapport au véhicule.

Conformément à l'invention, l'élément arrière 12 comporte un élément central 15 qui s'étend jusqu'à l'articulation 11 entre les éléments avant 10 et arrière 12. Cet élément central 15 est articulé en 19b par rapport à l'élément arrière 12 et coopère avec des moyens qui, en position de rangement du toit dans le coffre 14, maintiennent l'élément central 15 à une certaine distance au-dessus de l'élément arrière 12. Cette disposition augmente la hauteur E (voir figure 4) disponible dans le coffre 14.

Les figures 3 et 6 montrent que l'élément avant 10 est fixé de façon articulée en 17 à l'extrémité d'un tirant 18 disposé de chaque côté du véhicule, dont l'autre extrémité est fixée de façon articulée en 19a au véhicule. Le tirant 18 est adapté pour maintenir l'élément avant 10 dans une position sensiblement horizontale lors du pivotement de l'élément arrière 12 vers le coffre autour de son articulation 13.

L'élément central 15 est relié à un tirant 17a par l'intermédiaire d'un bras 19 émanant de cet élément central, l'autre extrémité du tirant 17a étant articulée sur le châssis du véhicule en 16. Le bras 19 est agencé pour faire pivoter l'élément central 15 suivant son articulation 19b en sens inverse du pivotement de l'élément arrière autour de l'articulation 13.

Chaque bras 19 comporte une extrémité fixée de façon articulée en 20 au tirant 17a et une extrémité 21 solidaire du bord de l'élément central 15.

Chaque tirant 17a comporte une extrémité fixée de façon articulée en 20 au bras 19 et l'autre extrémité articulée en 16 au châssis du véhicule.

Dans l'exemple représenté, l'élément central 15 est constitué par la lunette arrière du toit.

On voit sur la figure 6, que le pivotement du toit est commandé par un moteur électrique 22 entraînant au moyen de deux demi-arbres 23 et d'un pignon 24, un pignon ou secteur denté 25 solidaire de l'axe de rotation 13 de l'élément arrière 12 du toit.

Le mouvement de pivotement du toit peut être équilibré par un vérin 26.

Comme montré par la figure 7, le vérin 26 est fixé de façon articulée en 27 d'une part au châssis du véhicule et d'autre part en 28 au pignon 25 solidaire de l'axe de rotation 13 de l'élément arrière 12 du toit.

On va maintenant expliquer le fonctionnement du toit repliable que l'on vient de décrire.

L'ouverture du toit est commandée par un système électro-mécanique. Les deux secteurs dentés 25 disposés symétriquement solidaires du toit sont entraînés par deux pignons 24 commandés par les deux demi-arbres entraînés eux-mêmes par un moteur électrique 22 solidaire du châssis.

L'élément de toit 12 pivote vers l'arrière en entraînant le toit 12 articulé en 11 et maintenu constamment horizontal par le tirant 18 articulé d'une part sur le châssis et d'autre part sur l'élément de toit 10.

L'élément de toit 12 entraîne également dans son mouvement l'élément 15 articulé sur ledit toit en 19b. La position relative de l'élément 15 par rapport au toit 12 est contrôlée par le bras 19 entraîné par le tirant 17a articulé d'une part sur ledit bras en 20 et d'autre part sur le châssis du véhicule en 16.

Le mouvement combiné du toit 12 et du tirant 17a représentant les deux bras d'un parallélogramme maintient l'élément 15 dans une position contrôlée. Ce contrôle permet premièrement d'éviter toute interférence dans le mouvement entre le toit 12 et l'élément 15. Deuxièmement, il permet d'assurer un passage correct au niveau de la tête du passager arrière du véhicule. Troisièmement, il conditionne la position d'arrivée dans le coffre arrière.

Le mouvement de rotation du toit est équilibré par le vérin 26 articulé sùr le châssis et sur le secteur denté 25. La position judicieuse de ce vérin permet de pousser le toit à l'ouverture jusqu'à un point neutre 28 et de le retenir ensuite et inversement à la fermeture. Ce système permet d'une part d'équilibrer l'ensemble pour des versions non motorisées et d'autre part de limiter la puissance moteur en version motorisée.

Un autre avantage de l'invention, illustré par la figure 5 consiste en la possibilité d'incliner le plus possible l'élément 12 selon les possibilités offertes par le passage de roue en H sans nuire à la hauteur E de coffre et permettant ainsi à reculer le plus possible la cloison 29 pour permettre d'optimiser l'espace aux places arrière du véhicule.

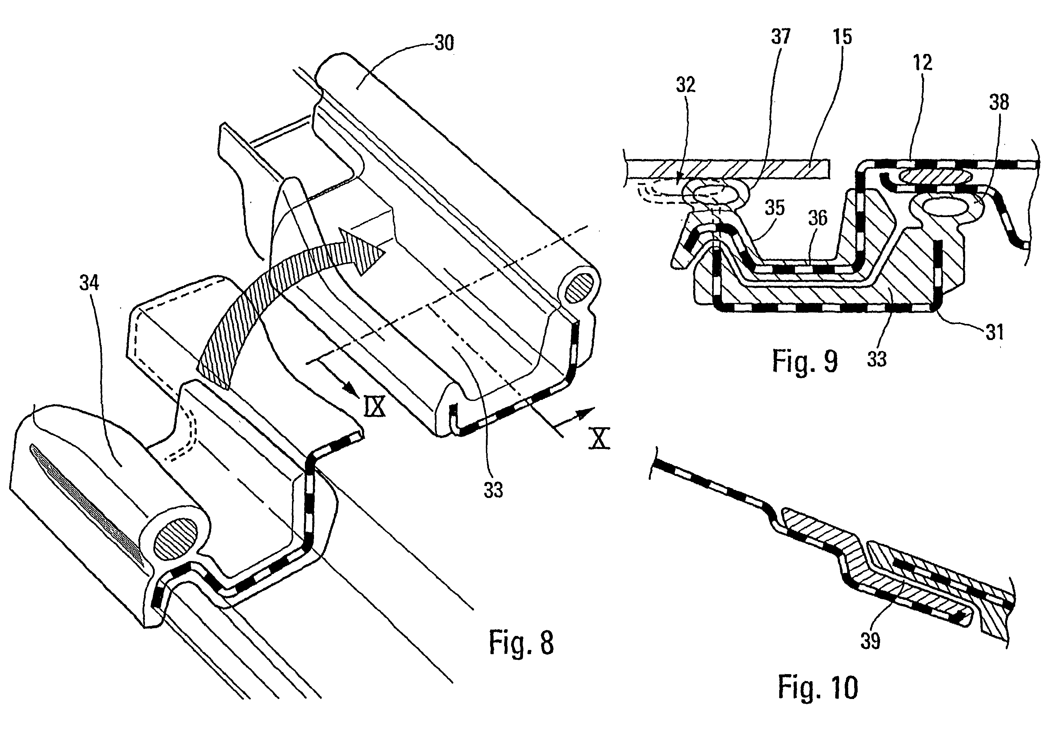

Pour assurer l'étanchéité au niveau du centre de rotation 16, un dessin spécifique des joints est nécessaire, comme montré sur les figures 8, 9, 10.

Un joint 30 est clippé sur une gouttière 31 solidaire de l'élément 15 en 32 par collage ou autre. Cette gouttière 31 existe uniquement dans la partie supérieure de l'élément 15 et s'arrête au niveau du centre de rotation 16 pour échapper de l'élément 12 lors de la rotation.

Le dessin spécifique 33 de la terminaison du joint permet son emboîtement sur la terminaison supérieure du dessin spécifique 34 du joint 35 solidaire de l'élément 12 et clippé sur une gouttière 36 de cet élément 12.

Cette gouttière 36 existe uniquement dans la partie inférieure de l'élément 12 et s'arrête au niveau du centre de rotation 16 pour échapper de l'élément 15 lors de sa rotation.

La partie souple 37 du joint 35 assure l'étanchéité inférieure entre les éléments 12 et 15.

La partie souple 38 du joint 33 assure l'étanchéité supérieure entre les éléments 12 et 15.

La zone 39 à l'emboîtement assure (voir figure 10) la liaison d'étanchéité entre les deux éléments 12 et 15.

Bien entendu l'invention n'est pas limitée à l'exemple que l'on vient de décrire et on peut apporter à celui-ci de nombreuses modifications sans sortir du cadre de l'invention, tant que celle-ci demeure définie par les revendications.

## Revendications (Revendications pour l'(les) Etat(s) contractant(s) suivant(s): ES)

1. Toit repliable pour véhicule découvrable, comprenant un élément avant (10) articulé à un élément arrière (12) dont l'extrémité arrière est articulée par rapport au véhicule, ces deux éléments (10, 12) pouvant être rangés dans le coffre (14) du véhicule, de façon que l'élément avant (10) soit replié sur l'élément arrière (12) relié à son articulation (13) par rapport au véhicule, **caractérisé en ce que** l'élément arrière (12) comportant un élément central (15) qui s'étend jusqu'à l'articulation (11) entre les éléments avant (10) et arrière (12), cet élément central (15) étant articulé par rapport à l'élément arrière (12) et coopérant avec des moyens qui, en position de rangement dans le coffre, maintiennent l'élément central (15) à une certaine distance au-dessus de l'élément arrière (12).

2. Toit repliable conforme à la revendication 1, **caractérisé en ce que** l'élément avant (10) est fixé de façon articulée à l'extrémité d'un tirant (18) dont l'autre extrémité est fixée de façon articulée au véhicule, ce tirant (18) étant adapté pour maintenir ledit élément avant (10) dans une position sensiblement horizontale lors du pivotement de l'élément arrière (12) vers le coffre (14) autour de son articulation (13).

3. Toit repliable conforme à la revendication 1 ou 2, **caractérisé en ce que** l'élément central (15) est relié à une extrémité d'un tirant (17a) par l'intermédiaire d'un bras (19) émanant de cet élément central et agencé pour faire pivoter l'élément central (15) suivant son articulation (19b) en sens inverse du pivotement de l'élément arrière autour de l'articulation (13).

4. Toit repliable conforme à la revendication 3, **caractérisé en ce que** l'autre extrémité du tirant (17a) est articulée sur le châssis du véhicule.

5. Toit repliable conforme à la revendication 3 ou 4, **caractérisé en ce que** chaque bras (19) comporte une extrémité fixée de façon articulée en (20) à une extrémité du tirant (17a) et une extrémité (21) solidaire du bord de l'élément central (15).

6. Toit repliable conforme à l'une quelconque des revendications précédentes, **caractérisé en ce que** chaque bras (19) est articulé en (19b) sur l'élément arrière (12).

7. Toit repliable conforme à l'une quelconque des revendications précédentes, **caractérisé en ce que** l'élément central (15) est constitué par la lunette arrière du toit.

8. Toit repliable conforme à l'une quelconque des revendication précédentes, **caractérisé en ce que** le pivotement du toit est commandé par un moteur électrique (22) entraînant au moyen d'un arbre (23) et d'un pignon (24), un pignon (25) solidaire de l'axe de rotation (13) de l'élément arrière (12) du toit.

9. Toit repliable conforme à l'une quelconque des revendications précédentes, **caractérisé en ce que** le mouvement de pivotement du toit est équilibré par un vérin (26).

10. Toit repliable conforme à la revendication 9, **caractérisé en ce que** le vérin (26) est fixé de façon articulée d'une part au chassîs du véhicule et d'autre part au pignon (25) solidaire de l'axe de rotation (13) de l'élément arrière (12) du toit.

## Revendications (Revendications pour l'(les) Etat(s) contractant(s) suivant(s): DE, GB, IT, SE)

1. Toit repliable pour véhicule découvrable, comprenant un élément avant (10) articulé à un élément arrière (12) dont l'extrémité arrière est articulée par rapport au véhicule, ces deux éléments (10, 12) pouvant être rangés dans le coffre (14) du véhicule, de façon que l'élément avant (10) soit replié sur l'élément arrière (12) relié à son articulation (13) par rapport au véhicule, l'élément arrière (12) comportant un élément central (15) qui s'étend jusqu'à l'articulation (11) entre les éléments avant (10) et arrière (12), cet élément central (15) étant articulé par rapport à l'élément arrière (12) et coopérant avec des moyens qui, en position de rangement dans le coffre, maintiennent l'élément central (15) à une certaine distance au-dessus de l'élément arrière (12), l'élément central (15) étant relié à une extrémité d'un tirant (17a) par l'intermédiaire d'un bras (19) émanant de cet élément central, le bras (19) étant agencé pour faire pivoter l'élément central (15) suivant son articulation (19b) sur l'élément arrière (12) en sens inverse du pivotement de l'élément arrière (12) autour de l'articulation (13), et l'autre extrémité du tirant (17a) étant articulée sur le châssis du véhicule.

2. Toit repliable conforme à la revendication 1, **caractérisé en ce que** l'élément avant (10) est fixé de façon articulée à l'extrémité d'un tirant (18) dont l'autre extrémité est fixée de façon articulée au véhicule, ce tirant (18) étant adapté pour maintenir ledit élément avant (10) dans une position sensiblement horizontale lors du pivotement de l'élément arrière (12) vers le coffre (14) autour de son articulation (13).

3. Toit repliable conforme à la revendication 1 ou 2, **caractérisé en ce que** chaque bras (19) comporte une extrémité fixée de façon articulée en (20) à une extrémité du tirant (17a) et une extrémité (21) solidaire du bord de l'élément central (15).

4. Toit repliable conforme à l'une quelconque des revendications précédentes, **caractérisé en ce que** l'élément central (15) est constitué par la lunette arrière du toit.

5. Toit repliable conforme à l'une quelconque des revendications précédentes, **caractérisé en ce que** le pivotement du toit est commandé par un moteur électrique (22) entraînant au moyen d'un arbre (23) et d'un pignon (24), un pignon (25) solidaire de l'axe de rotation (13) de l'élément arrière (12) du toit.

6. Toit repliable conforme à l'une quelconque des revendications précédentes, **caractérisé en ce que** le mouvement de pivotement du toit est équilibré par un vérin (26).

7. Toit repliable conforme à la revendication 6, **caractérisé en ce que** le vérin (26) est fixé de façon articulée d'une part au châssis du véhicule et d'autre part au pignon (25) solidaire de l'axe de rotation (13) de l'élément arrière (12) du toit.

## Claims (Claims for the following Contracting State(s): ES)

1. A folding roof for a convertible vehicle, comprising a front element (10) articulated to a rear element (12), the rear end of which is articulated with respect to the vehicle, said two elements (10, 12) being adapted to be so stored in the vehicle boot (14) that the front element (10) is folded on to the rear element (12) connected to its articulation (13) with respect to the vehicle, **characterised in that** the rear element (12) comprising a central element (15) which extends as far as the articulation (11) between the front element (10) and the rear element (12), said central element (15) being articulated with respect to the rear element (12) and co-operating with means which, in the position of storage in the boot, maintain the central element (15) at a certain distance above the rear element (12).

2. A folding roof according to claim 1, **characterised in that** the front element (10) is pivotally fixed at the end of a link (18) the other end of which is pivotally fixed to the vehicle, said link (18) being adapted to maintain the front element (10) in a substantially horizontal position on pivoting of the rear element (12) towards the boot (14) about its articulation (13).

3. A folding roof according to claim 1 or 2, **characterised in that** the central element (15) is connected to one end of a link (17a) by means of an arm (19) extending from said central element, the arm (19) being arranged so as to pivot the central element (15) about its articulation (19b) in the opposite direction to the pivoting of the rear element (12) about the articulation (13).

4. A folding roof according to claim 3, **characterised in that** the other end of the link (17a) is articulated on the vehicle chassis.

5. A folding roof according to claim 3 or 4, **characterised in that** each arm (19) comprises an end pivotally fixed at (20) to one end of the link (17a) and one end (21) secured to the edge of the central element (15).

6. A folding roof according to any one of the preceding claims, **characterised in that** each arm (19) is articulated at (19b) to the rear element (12).

7. A folding roof according to any one of the preceding claims, **characterised in that** the central element (15) is formed by the rear window of the roof.

8. A folding roof according to any one of the preceding claims, **characterised in that** the pivoting of the roof is controlled by an electric motor (22) which by means of a shaft (23) and a pinion (24) drives a pinion (25) secured to the rotational shaft (13) of the rear element (12) of the roof.

9. A folding roof according to any one of the preceding claims, **characterised in that** the pivoting movement of the roof is balanced by a jack (26).

10. A folding roof according to claim 9, **characterised in that** the jack (26) is pivotally fixed on the one hand to the vehicle chassis and on the other hand to the pinion (25) secured to the rotational shaft (13) of the rear element (12) of the roof.

## Claims (Claims for the following Contracting State(s): DE, GB, IT, SE)

1. A folding roof for a convertible vehicle, comprising a front element (10) articulated to a rear element (12), the rear end of which is articulated with respect to the vehicle, said two elements (10, 12) being adapted to be so stored in the vehicle boot (14) that the front element (10) is folded on to the rear element (12) connected to its articulation (13) with respect to the vehicle, the rear element (12) comprising a central element (15) which extends as far as the articulation (11) between the front element (10) and the rear element (12), said central element (15) being articulated with respect to the rear element (12) and co-operating with means which, in the position of storage in the boot, maintain the central element (15) at a certain distance above the rear element (12), the central element (15) being connected to one end of a link (17a) by means of an arm (19) extending from said central element, the arm (19) being arranged so as to pivot the central element (15) about its articulation (19b) on the rear element (12) in the opposite direction to the pivoting of the rear element (12) about the articulation (13), and the other end of the link (17a) being articulated on the vehicle chassis.

2. A folding roof according to claim 1, **characterised in that** the front element (10) is pivotally fixed at the end of a link (18) the other end of which is pivotally fixed to the vehicle, said link (18) being adapted to maintain the front element (10) in a substantially horizontal position on pivoting of the rear element (12) towards the boot (14) about its articulation (13).

3. A folding roof according to claim 1 or 2, **characterised in that** each arm (19) comprises an end pivotally fixed at (20) to one end of the link (17a) and one end (21) secured to the edge of the central element (15).

4. A folding roof according to any one of the preceding claims, **characterised in that** the central element (15) is formed by the rear window of the roof.

5. A folding roof according to any one of the preceding claims, **characterised in that** the pivoting of the roof is controlled by an electric motor (22) which by means of a shaft (23) and a pinion (24) drives a pinion (25) secured to the rotational shaft (13) of the rear element (12) of the roof.

6. A folding roof according to any one of the preceding claims, **characterised in that** the pivoting movement of the roof is balanced by a jack (26).

7. A folding roof according to claim 6, **characterised in that** the jack (26) is pivotally fixed on the one hand to the vehicle chassis and on the other hand to the pinion (25) secured to the rotational shaft (13) of the rear element (12) of the roof.

## Patentansprüche (Patentansprüche für folgende(n) Vertragsstaat(en): ES)

1. Faltbares Dach für ein Cabriolet-Fahrzeug, mit einem vorderen Element (10), das gelenkig mit einem hinteren Element (12) verbunden ist, dessen hinterer Endabschnitt in Bezug auf das Fahrzeug gelenkig gelagert ist, wobei diese beiden Elemente (10, 12) im Kofferraum (14) des Fahrzeugs auf eine solche Weise untergebracht werden können, daß das vordere Element (10) auf dem hinteren Element (12) abgelegt ist, welches mit seiner Gelenkverbindung (13) mit dem Fahrzeug verbunden ist, **dadurch gekennzeichnet, daß** das hintere Element (12) ein zentrales Element (15) aufweist, das sich bis zu der Gelenkverbindung (11) zwischen dem vorderen Element (10) und dem hinteren Element (12) erstreckt, wobei dieses zentrale Element (15) in Bezug auf das hintere Element (12) gelenkig gelagert ist und mit Mitteln zusammenwirkt, die, in der Ablageposition im Kofferraum, das zentrale Element (15) mit einem bestimmten Abstand oberhalb des hinteren Elements (12) halten.

2. Faltbares Dach nach Anspruch 1, **dadurch gekennzeichnet, daß** das vordere Element (10) in gelenkiger Weise am Endabschnitt einer Strebe (18) befestigt ist, deren anderer Endabschnitt in gelenkiger Weise am Fahrzeug befestigt ist, wobei diese Strebe (18) so gestaltet ist, daß sie das genannte vordere Element (10) in einer im wesentlichen horizontalen Position hält, während der Schwenkbewegung des hinteren Elements (12) in Richtung auf den Kofferraum (14) um seine Gelenkverbindung (13).

3. Faltbares Dach nach Anspruch 1 oder 2, **dadurch gekennzeichnet, daß** das zentrale Element (15) mit einem Endabschnitt einer Strebe (17a) verbunden ist, unter Zwischenschaltung eines Arms (19), der von diesem zentralen Element abgeht und so gestaltet ist, daß er das zentrale Element (15) um seine Gelenkverbindung (19b) schwenken läßt, in umgekehrter Richtung der Schwenkbewegung des hinteren Elements um seine Gelenkverbindung (13).

4. Faltbares Dach nach Anspruch 3, **dadurch gekennzeichnet, daß** der andere Endabschnitt der Strebe (17a) gelenkig an der Karosserie des Fahrzeugs angelenkt ist.

5. Falbares Dach nach Anspruch 3 oder 4, **dadurch gekennzeichnet, daß** jeder Arm (19) einen Endabschnitt aufweist, der bei (20) gelenkig an der Strebe (17a) befestigt ist, und einen Endabschnitt (21), der mit dem Rand des zentralen Elements (15) fest verbunden ist.

6. Faltbares Dach nach einem der vorangehenden Ansprüche, **dadurch gekennzeichnet, daß** jeder Arm (19) bei (19b) gelenkig an dem hinteren Element (12) angelenkt ist.

7. Faltbares Dach nach einem der vorangehenden Ansprüche, **dadurch gekennzeichnet, daß** das zentrale Element (15) durch die Heckscheibe des Dachs gebildet ist.

8. Faltbares Dach nach einem der vorangehenden Ansprüche, **dadurch gekennzeichnet, daß** die Schwenkbewegung des Dachs durch einen Elektromotor (22) gesteuert wird, der mittels einer Welle (23) und eines Zahnrads (24) ein Zahnrad (25) antreibt, das fest mit der Drehachse (13) des hinteren Elements (12) des Dachs verbunden ist.

9. Faltbares Dach nach einem der vorangehenden Ansprüche, **dadurch gekennzeichnet, daß** die Schwenkbewegung des Dachs durch einen Druckzylinder (26) ins Gleichgewicht gebracht wird.

10. Faltbares Dach nach Anspruch 9, **dadurch gekennzeichnet, daß** der Druckzylinder (26) einerseits mit dem Fahrgestell des Fahrzeugs und andererseits mit einem Zahnrad (25) gelenkig verbunden ist, das mit der Drehachse (13) des hinteren Elements (12) des Dachs fest verbunden ist.

## Patentansprüche (Patentansprüche für folgende(n) Vertragsstaat(en): DE, GB, IT, SE)

1. Faltbares Dach für ein Cabriolet-Fahrzeug, mit einem vorderen Element (10), das gelenkig mit einem hinteren Element (12) verbunden ist, dessen hinterer Endabschnitt in Bezug auf das Fahrzeug gelenkig gelagert ist, wobei diese beiden Elemente (10, 12) im Kofferraum (14) des Fahrzeugs auf eine solche Weise untergebracht werden können, daß das vordere Element (10) auf dem hinteren Element (12) abgelegt ist, welches mit seiner Gelenkverbindung (13) mit dem Fahrzeug verbunden ist, wobei das hintere Element (12) ein zentrales Element (15) aufweist, das sich bis zu der Gelenkverbindung (11) zwischen dem vorderen Element (10) und dem hinteren Element (12) erstreckt, wobei dieses zentrale Element (15) in Bezug auf das hintere Element (12) gelenkig gelagert ist und mit Mitteln zusammenwirkt, die, in der Ablageposition im Kofferraum, das zentrale Element (15) mit einem bestimmten Abstand oberhalb des hinteren Elements (12) halten, wobei das zentrale Element (15) mit einem Endabschnitt einer Strebe (17a) verbunden ist, unter Zwischenschaltung eines Arms (19), der von diesem zentralen Element abgeht, wobei der Arm (19) so ausgebildet ist, daß er das zentrale Element (15) um seine Gelenkverbindung (19b) auf dem hinteren Element (12) schwenken läßt, in umgekehrter Richtung der Schwenkbewegung des hinteren Elements (12) um die Gelenkverbindung (13), wobei der andere Endabschnitt der Strebe (17a) an der Karosserie des Fahrzeugs gelenkig angelenkt ist.

2. Faltbares Dach nach Anspruch 1, **dadurch gekennzeichnet, daß** das vordere Element (10) in gelenkiger Weise am Endabschnitt einer Strebe (18) befestigt ist, deren anderer Endabschnitt in gelenkiger Weise am Fahrzeug befestigt ist, wobei diese Strebe (18) so gestaltet ist, daß sie das genannte vordere Element (10) in einer im wesentlichen horizontalen Position hält, während der Schwenkbewegung des hinteren Elements (12) in Richtung auf den Kofferraum (14) um seine Gelenkverbindung (13).

3. Falbares Dach nach Anspruch 1 oder 2, **dadurch gekennzeichnet, daß** jeder Arm (19) einen Endabschnitt aufweist, der bei (20) gelenkig an der Strebe (17a) befestigt ist, und einen Endabschnitt (21), der mit dem Rand des zentralen Elements (15) fest verbunden ist.

4. Faltbares Dach nach einem der vorangehenden Ansprüche, **dadurch gekennzeichnet, daß** das zentrale Element (15) durch die Heckscheibe des Dachs gebildet ist.

5. Faltbares Dach nach einem der vorangehenden Ansprüche, **dadurch gekennzeichnet, daß** die Schwenkbewegung des Dachs durch einen Elektromotor (22) gesteuert wird, der mittels einer Welle (23) und eines Zahnrads (24) ein Zahnrad (25) antreibt, das fest mit der Drehachse (13) des hinteren Elements (12) des Dachs verbunden ist.

6. Faltbares Dach nach einem der vorangehenden Ansprüche, **dadurch gekennzeichnet, daß** die Schwenkbewegung des Dachs durch einen Druckzylinder (26) ins Gleichgewicht gebracht wird.

7. Faltbares Dach nach Anspruch 6, **dadurch gekennzeichnet, daß** der Druckzylinder (26) einerseits mit dem Fahrgestell des Fahrzeugs und andererseits mit einem Zahnrad (25) gelenkig verbunden ist, das mit der Drehachse (13) des hinteren Elements (12) des Dachs fest verbunden ist.
